Europäisches Patentamt

European Patent Office

Office européen des brevets

(11) Publication number: **0 668 679 A2**

# EUROPEAN PATENT APPLICATION

(21) Application number: **95200368.9**

(51) Int. Cl.⁶: **H04L 5/06**

(22) Date of filing: **15.02.95**

(30) Priority: **22.02.94 IT MI940311**

(43) Date of publication of application:
**23.08.95 Bulletin 95/34**

(84) Designated Contracting States:
**DE FR IT**

(71) Applicant: **ITALTEL SOCIETA ITALIANA TELECOMUNICAZIONI s.p.a.**
**P.le Zavattari, 12**
**I-20149 Milano (IT)**

(72) Inventor: **Cariolaro, Gianfranco**
**Via Callegari, 3**
**35037 Teolo - Padova (IT)**
Inventor: **Castagna, Giovanni**
**Via Puricelli Guerra, 58**
**20099 Sesto S. Giovanni- Milano (IT)**

(74) Representative: **Giustini, Delio**
**c/o Italtel Società Italiana**
**Telecomunicazioni s.p.a.**
**P.O. Box 10**
**I-20019 Settimo Milanese (MI) (IT)**

(54) **OFDM system.**

(57) Orthogonal frequency division multiplexing system and method (OFDM) for the transmission N of data sequences or channels ($s_0$ - $s_{N-1}$) at a predetermined rate F, consisting of a transmsitter, an intermediate transmission mean and a receiver. The transmitter includes a rate converter (LMRC) having N inputs and I outputs, where $N = M.I$, with M and I integer, producing at output I channels ($a_0$, $a_1$, $a_2$ , .. $a_{I-1}$) at a rare F1 higher than F, a processor (I-DFT) able to perform the discrete Fourier transform on the I channels, a first plurality of multitone modulators ($A_0$, $A_1$, $A_2$, .. $A_{I-1}$) supplied by a first carrier, polyphase filters ($Q_0(f)$, $Q_i(f)$, $Q_{I-1}(f)$) connected to the multitone modulator of said first plurality and a second plurality of multitone modulators ($B_0$, $B_1$, $B_2$, .. $B_{I-1}$), connected to polyphase filters and supplied by a second carrier.

The receiver has a dual structure.

Fig. 5

Technical Field

This invention relates generally to a telecommunication systems known as OFDM (Orthogonal Frequency Division Multiplexing), that is digital orthogonal frequency division multiplexing systems for data transmission, where data coming from a source are divided into a given number of data sequences and multiplexed according to a frequency division format.

In particular the invention finds its preferred application, while it is not limited to the same, in the field of digital television transmission systems.

Systems of this kind (or multicarrier) are employed to optimize the transmission of a large data flow, dividing the spectrum to be transmitted into a great number of sub-bands. This systems offers different advantages, such as for instance that to distribute the information avoiding troubles due to fading phenomena. The technical problem arising is therefore to manufacture a great number of high effective transreceivers, thus reducing in particular the number of complex operations to be made at each second.

Background Art

The status of the known technique and the present invention will described hereafter, mainly referring to the transmitting portion of the system since the receiving portion has an essentially dual structure and operation.

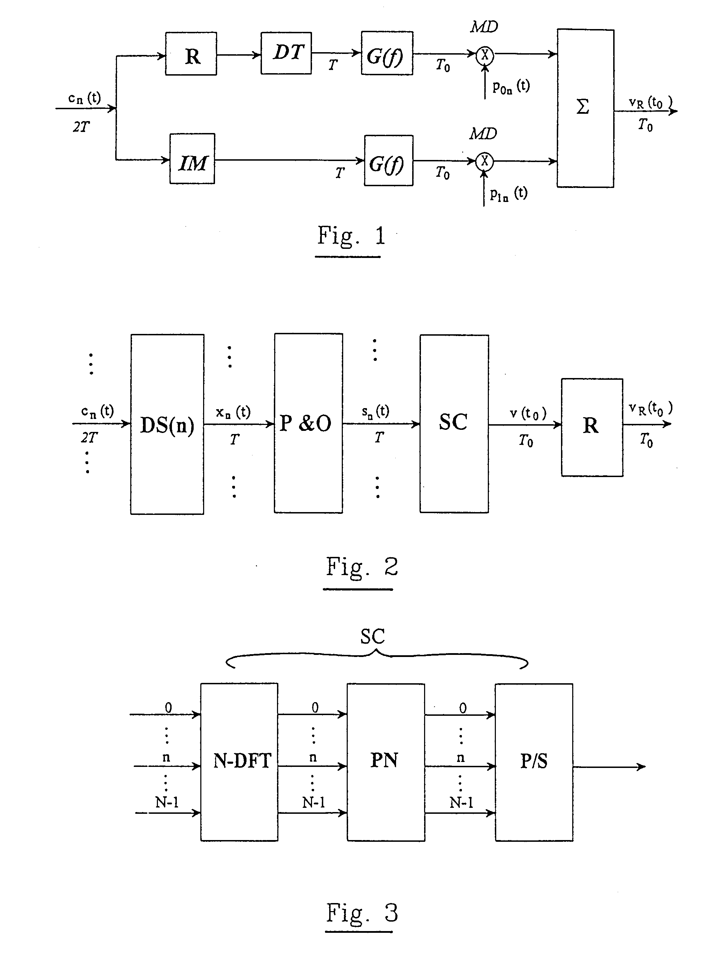

Referring to a transmitter for OFDM system in the general diagram (known) shown in Fig. 1, we start from a plurality of N data sequences (or channels), indicated with $c_n(t)$, which is divided into 2N pairs, each pair of the sequence consisting of a real component R and of imaginary component IM. One sequence of the pair, for instance the real sequence, is delayed in a block DT, therefore both cross two separate interpolator filters G(f), then both the sequences of the pair are modulated (MD) with two carriers $P_{0n}(t)$ and $P_{1n}(t)$ having the same frequency, but 90° phase shifted, typically sine and cosine, and signals so modulated are summed up in an adder $\Sigma$ which output consists of the $V_R(t_0)$ signal.

Frequencies of the carriers $P_{0n}(t)$ and $P_{1n}(t)$ must be equidistant according to the relation:

$$f_n = F/4 + nF/2$$

where F is the speed of data of each sequence.

In Figure 1, time spacing between two subsequent values of the sequences have been indicated with T and $T_0$.

A known embodiment, following this method for channel treatment, is outlined in Fig. 2, foreseeing to divide signal processing into four steps, through the processing indicated with DS(n), P&O, SC and R respectively, and represented in summary through block arranged in cascade.

The operation made by the data staggering or shifting DS block (or Data Staggering) on data sequences $c_n(t)$ involves a simple multiplication, by 1 or by -j, respectively, being j the imaginary unit produces sequences $x_n(t)$ at output. The P&O block for pre-modulation and ordering, involves operations such as the multiplication by $j^k$, the execution of connections and the possible extraction of a conjugate signal and its multiplication by $j^k$, producing at output the $s_n(t)$ sequences.

Operations of DS, P&O and R blocks are non critical, since the same are operations of neglectable calculation complexity, while critical processing, as for the speed and complexity aspects are those to be made in the SC block.

Referring to Fig. 3, according to a solution described by B. Hirosaki in "An Orthogonally Multiplexed QAM System Using Discrete Fourier Transform, IEEE Trans. on Communications, vol. COM-29, No. 7, July 1881, the processing indicated by SC is made in three steps, that is through a processor (or similar device) able to perform an N-DFT (discrete Fourier transform on N points), the passage through a polyphase network PN consisting of N filters operating at low rate, and then a parallel-series conversion in the P/S block.

More in detail, the solution shown in Fig. 3 foresees an N-DFT processor performing the discrete Fourier transform on N channels from 0 to N-1, a polyphase network PN having N inputs connected to the N-DFT processor, and N outputs connected to a parallel-series converter P/S. Components N-DFT and PN operate at (low) rate F of the N input channels, while the output is high rate $F_0$, namely N times bigger than F.

Finally, coming back to the general diagram of Fig. 2, the R block, simply extracts the real portion.

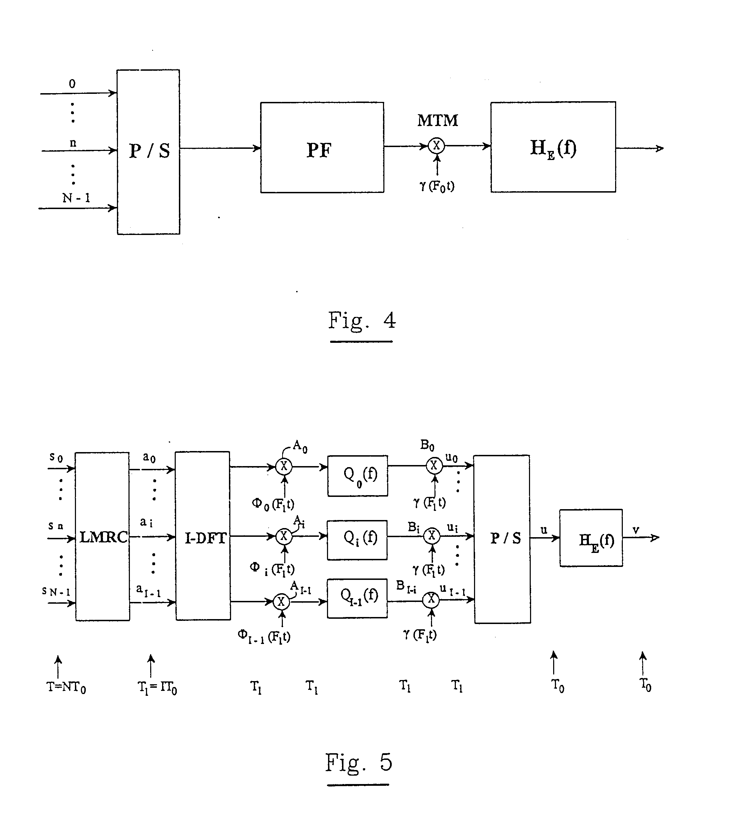

According to another known solution (see G. Cariolaro and others "A new architecture for orthogonally multiplexed QAM signals", GLOBECOM 1993), operations of the SC block can be made by the architecture shown in Fig. 4 foreseeing a parallel-series converter P/S supplied by the N channels 0 to N-1, which single output is connected to a sole polyphase filter PF, which is an all-pass filter with constant phase in each side band of the resulting OFDM signal. The filter output is connected to a multitone modulator MTM receiving a carrier $\gamma(F_0 t)$ and producing N simultaneous shifts in frequency, that is it performs a multitone modulation of the input signal. The multitone modulator output is connected to an equalizer $H_E(f)$.

According to the solution shown in Fig. 4, the serial operating mode is performed instead of the parallel one, that is all the components operate at a high rate $F_0 = N.F$, where F is the rate of each one of the N input channels. The circuit simplification involves on the other hand the immediate passage to a high rate operation.

## Objects of the Invention

The object of this invention is to improve the above mentioned transmission and reception systems, and particularly to reduce the circuit complexity of an OFDM system.

## Disclosure of the invention

In accordance with the invention this object is reached through an orthogonal frequency division multiplexing system (OFDM) for the transmission of N data sequences or channels at a set rate F, consisting of a transmitter including:
- data staggering means receiving said sequences at input;
- pre-modulation and ordering means connected to the outputs of said data staggering means; and
- multiplexing means;
- parallel series conversion means connected to the outputs of said multiplexing means,
characterized by the fact that said multiplexing means include:
- a first rate converter, having N inputs and I outputs, where $N = M.I$, with integer M and I, producing at output I channels at a rate $F_1$ higher than F;
- a first processor which inputs are connected to the outputs of said first converter, and performing the discrete Fourier transform on I channels;
- a first plurality of multitone modulators, each one connected to an output of said first processor, and receiving on the other input a carrier:

$$\phi_i (F_1 t) = W_N{}^{I\beta_M(F1t)} \qquad 0 \le i \le I-1$$

where $\beta_M(n)$ is the remainder of the integer division of n by M and

$$W_N = \exp^{(J2\pi/N)};$$

- a first plurality of polyphase filters, each one connected to the output of a corresponding multitone modulator of said first plurality;
- a second plurality of multitone modulators, each one connected to the output of the corresponding polyphase filter of said first plurality Q(f) and receiving on the other input a carrier

$$\gamma_i(F_1 t) = W_{2M}{}^{(F1t)2\dagger}.$$

The invention foresees therefore the factorisation by M and by I of the N input channels and the use of said multitone modulators connected upstream and downstream versus said polyphase filters.

It is possible to demonstrate that the use of the above mentioned multitone modulators allows to drastically reduce the complexity, in terms of operations to be made, of said processor performing the discrete Fourier transform on input channels compared with the complexity of the corresponding processor foreseen in the solution proposed by B. Hirosaki, with ensuing considerable advantages as for complexity/cost of the whole transmission system.

The invention consists also in a system with orthogonal frequency division multiplexing (OFDM), characterized by the fact that the receiver includes:
- parallel series conversion means receiving at input the signal emitted by the transmitter;
- demultiplexing means including:

a) a third plurality of multitone modulators each one connected to one of the I outputs of said series-parallel conversion means, and receiving on the other input a carrier:

$$\gamma_i(F_1 t) = W_{2M}^{(F1t)2t};$$

b) a second plurality of polyphase filters, each one connected to the output of the corresponding modulator of said third plurality of multitone modulators;

c) a fourth plurality of modulators, each one connected to the output of a corresponding filter of said second plurality of polyphase filters, and receiving on the other input a carrier:

$$\phi_i (F_1 t) = W_N^{I\beta_M(F1t)} \quad 0 \le i \le I-1$$

where $\beta_M(n)$ is the remainder of the integer division of n by M and $W_N = \exp^{(j2\pi/N)}$;

d) a second processor which inputs are connected to the outputs of multitone modulators of the fourth plurality, and performing the reverse discrete Fourier transform on I channels;

e) a second rate converter, having I inputs and N outputs, where N = M.I, with M and I integer, producing at output N channels at a rate F lower than $F_1$;

- demodulation and ordering means connected to the outputs of said demultiplexing means;
- means for re-alignment of data receiving at input the outputs of demodulation and ordering means and emitting at output data sequences.

The invention consists also of an orthogonal frequency division multiplexing method (OFDM) for the transmission of N data sequences or channels having a set rate F, said method including the following steps:

a - to submit said sequences to data staggering;

b - to pre-modulate and order the sequences so treated;

c - to multiplex the pre-modulated and ordered sequences;

d - to convert said sequences into a serial stream;

characterized by the fact to foresee also the following steps:

b1 - to convert said N pre-modulated and ordered sequences in I channels having a rate F1 higher than said set rate F, where N = M.I;

b2 - to perform the discrete Fourier transform on I channels;

b3 - to modulate each one of the I channels where the Fourier transform has been made with a carrier:

$$\phi_i (F_1 t) = W_N^{I\beta_M F1t)} \quad 0 \le i \le I-1$$

where $\beta_M(n)$ is the remainder of the integer division of n by M and $W_N = \exp^{(j2\pi/N)}$;

b4 - to filter said modulated I channels;

b5 - to modulate each one of the I channels filtered with a carrier:

$$\gamma_i(F_1 t) = W_{2M}^{(F_1 t)2t}.$$

Finally the invention consists of a method for orthogonal frequency division demultiplexing method (OFDM) of a multiplexed signal, said method foreseeing the following steps:

- to convert the serial signal received into I parallel channels, having a transmission rate F1 higher than the set rate F;
- to demodulate each one of the I parallel channels with a carrier:

$$\gamma_i(F_1 t) = W_{2M}^{(F_1 t)2t}.$$

- to filter the I channels so demodulated;
- to additionally demodulate the I channels filtered with a carrier:

$$\phi_i (F_1 t) = W_N^{I\beta_M(F1t)} \quad 0 \le i \le I-1$$

where $\beta_M(n)$ is the remainder of the integer division of n by M and $W_N = \exp^{(j2\pi/N)}$;

- to make the reverse discrete Fourier transform on the I demodulated channels;
- to convert the I channels submitted to Fourier transform into N channels having a rate F lower than the transmission rate F1 and equal to the set rate, where N = M.I;
- to demodulate and order the N channels at set rate F and re-align data so ordered to obtain the sequences of data transmitted in origin.

Brief Description of the Drawings

The features of the invention that are believed to be novel are set forth with particularity in the appended claims.

The invention together with further objects and advantages thereof may be understood with reference to the following description taken in conjunction with the accompanying drawings and in which:

Fig. 1, already described, outlines the treatment of one of the pair of sequences according to the conventional scheme;

Fig. 2, already described, shows the general processing diagram of an OFDM system in transmission;

Fig. 3, already described, shows a known diagram of the SC unit of Fig.2,

Fig. 4, already described, shows another known diagram of the SC unit of Fig.2,

Fig. 5 shows a realization diagram of the SC unit of Fig. 2 realized according to the invention;

Fig. 6 shows the general diagram for the processing of an OFDM system in reception; and

Fig. 7 shows a realization form of the CS unit of Fig.6 realized according to the invention.

Detailed Description of a Preferred Embodiment

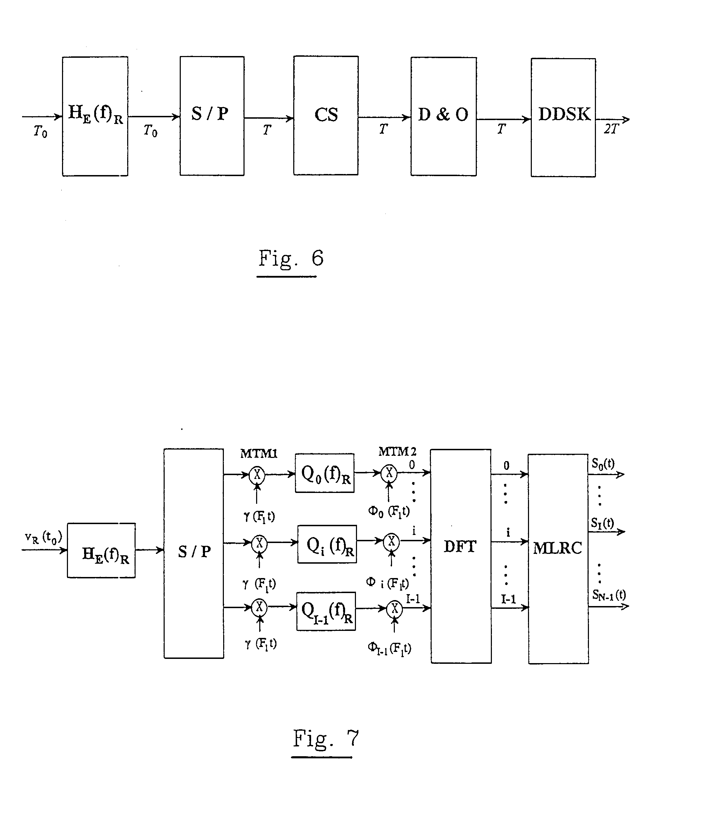

According to the invention, the SC portion in transmission (and the CS portion in reception) contains the system computation complexity. The complete diagram of the transmitter is obtained adding the DS, P&O and R indicated in Fig. 2, while the complete one of the receiver is obtained adding the parts D&O and DDSK portions indicated in Fig. 6 to the CS portion shown in the detail of Fig. 7.

Making particular reference to Fig. 5, showing the SC unit of Fig. 2 realized according to the invention, the number N of sequences (or channels) at input $S_0$, $S_1$, $S_2$, .. $S_{N-1}$ is divided into two factors M and I, integer and such that N = M.I.

For instance, in the case of N = 128, M and I values can be equal to 32 and to 4, respectively, or to 16 and 8, or 8 and 16.

It must be noticed that the transmitter diagram foresees the following rates:
- "low" rate F relevant to each data sequence;
- "high" rate $F_0$ = N.F;
- "medium" rate F1 = M.F, where M = N/I.

Consequently the following time spacings of sequences are obtained:
- T = 1/F;
- T1 = 1/F1;
- To = 1/$F_0$.

The N origin channels $S_0$ - $S_{N-1}$ are brought to the input of a rate converter LMRC (low to medium) producing ar output a number I of channels $a_0$, $a_1$, .. $a_{I-1}$.

The outputs I of the LMRC converter form the inputs of an I-DFT processor (I points) performing the reverse discrete Fourier transform on the I input channels.

The outputs of the I-DFT processor are connected to the same number of multitone modulators of a first plurality $A_0$, $A_1$, $A_2$, .. $A_{I-1}$ receiving on the other input the carriers:

$$\phi_i \; (F_1 t) \; = \; W_N^{\; i\beta_M(F1t)} \qquad 0 \le i \le I-1 \qquad\qquad 1).$$

where $\beta_M(n)$ is the remainder of the integer division of n by M and $W_N = \exp^{(j2\pi/N)}$.

The outputs A of multitone modulators are connected to a set of polyphase filters consisting of I different filters $Q_i(f)$, each one having a response to the pulse given by:

$$q_i(rT_1) = T/T_1 \; . \; h(rT_1 + iT_0) \lambda \; (r) \qquad\qquad 2).$$

where $h(T_0)$ is the S/P of the response to the pulse $h(t_0) = g(t_0)e^{j2\pi F/4TO}$, and

5

$$\lambda(r) = W_{2N}^{\ -r2}$$

The outputs of polyphase filters $Q_i(f)$ are connected to a second set of multitone modulators consisting of modulators $B_0$, $B_1$, $B_2$, .. $B_{I-1}$, identical and supplied by carriers expressed by:

$$\gamma_i(F_1 t) = W_{2M}^{(F1t)2t} \qquad\qquad 3).$$

It must be noticed that I-DFT components, A, Q and B operate at an "intermediate" rate $F_1$ = M.F = $F_0$/I

The outputs of B multitone modulators are connected to a parallel/series converter P/S, which output is connected to an equalizer $H_E(f)$ producing the output signal v.

As for the receiving portion, which is dual of the transmission one, Fig. 6 shows the general processing diagram of the receiver including an equalizer $H_E(f)_R$, at which output a serial-parallel converter S/P is connected and which outputs are connected to the CS device performing the essential portion of demultiplexing, and to the D&O demodulation and ordering means to the output of which the DDSK data re-alignment means are connected.

Fig. 7 shows more in detail the structure of the CS device of figure 6 including a first plurality of multitone demodulators MTM1, each one connected to an output of said serial-parallel (S/P) conversion means, and receiving on the other input a carrier

$$\gamma_i(F_1 t) = W_{2M}^{\ (F1t)2t}$$

The outputs of multitone demodulators are connected to a corresponding plurality of polyphase filters $Q_i(f)_R$, each one of which has an output connected to a respective demodulator of a second plurality of multitone demodulators MTM2 and receiving on the other input a carrier:

$$\phi_i\ (F_1 t)\ =\ W_N^{i\beta_M(F1t)} \qquad 0 \leq i \leq I-1$$

where $\beta_M$ is the remainder of the integer division of n by M;

The outputs of demodulators are connected to a DFT processor performing the discrete Fourier transform on channels and the outputs of the processor are connected to a medium to low rate converter (MLRC) having I inputs and N outputs, where N = M.I, with M and I integer, producing at output N channels $s_0$, $s_1$, $s_2$, .. $s_{N-1}$ at a rate F lower than $F_1$.

Factorisation by M and I of the N input channels and the use of multitone modulators transmission side (A,B) and reception side (MTM1, MTM2) allows to obtain considerable advantages.

In particular, from the studies conducted by the Applicant, we can demonstrate that the above mentioned innovative solutions allow to drastically reduce the complexity of said processors I-DFT and DFT performing the transform, namely the reverse Fourier transform on input channels, allowing to reduce the complexity/cost of the whole transmission system.

While a particular embodiment of the present invention has been shown and described, it should be understood that the present invention is not limited thereto since other embodiments may be made by those skilled in the art without departing from the true scope thereof. It is thus contemplated that the present invention encompasses any and all such embodiments covered by the following claims.

## Claims

1. Orthogonal frequency division multiplexing system (OFDM) for the transmission of N sequences or channels of data $c_n(t)$ at a predetermined rate F , consisting of a transmitter including:
   - data staggering means (DS) receiving said sequences $c_n(t)$ at input;
   - pre-modulation and ordering means (P&O) connected to the outputs of said data staggering means (DS); and
   - multiplexing means (SC);
   - parallel series conversion means (P/S) connected to the outputs of said multiplexing means (SC), characterized by the fact that said multiplexing means (SC) include:
   - a first rate converter (LMRC), having N inputs and I outputs, where N = M.I, with integer M and I, producing at output I channels ($a_0$, $a_1$, $a_2$, .. $a_{I-1}$) at a rate $F_1$ higher than F;

6

- a first processor (I-DFT) which inputs are connected to the outputs of said first rate converter (LMRC), and performing the discrete Fourier transform on I channels;
- a first plurality of multitone modulators ($A_0$, $A_1$, $A_2$, .. $A_{I-1}$), each one connected to an output of said first processor (I-DFT), and receiving on the other input a carrier:

$$\phi_i \ (F_1t) \ = \ W_N \ ^{I\beta_M(F1t)} \qquad 0 \le i \le I-1$$

where $\beta_M(n)$ is the remainder of the integer division of n by M and $W_N = \exp^{(j2\pi/N)}$;

- a first plurality of polyphase filters ($Q_0(f)$, $Q_i(f)$, $Q_{I-1}(f)$) each one connected to the output of a corresponding multitone modulator of said first plurality (B);
- a second plurality of multitone modulators ($B_0$, $B_1$, $B_2$, .. $B_{I-1}$), each one connected to the output of the corresponding polyphase filter of said first plurality Q(f) and receiving on the other input a carrier:

$$\gamma_i(F_1t) \ = \ W_{2M} \ ^{(F1t)2\dagger}.$$

2. System with orthogonal frequency division multiplexing (OFDM) according to claim 1, characterized by the fact that the receiver includes:
   - parallel-serial conversion means (S/P) receiving at input the signal emitted by the transmitter;
   - demultiplexing means (CS) including:
     a) a third plurality of multitone modulators (MTM) each one connected to one of the I outputs of said serial-parallel conversion means (S/P), and receiving on the other input a carrier:

$$\gamma_i(F_1t) \ = \ W_{2M} \ ^{(F1t)2}.$$

     b) a second plurality of polyphase filters $Q_i(f)_R$, each one connected to the output of the corresponding modulator of said third plurality of multitone modulators (MTM1);
     c) a fourth plurality of modulators (MTM2), each one connected to the output of a corresponding filter of said second plurality of polyphase filters $Q_i(f)_R$, and receiving on the other input a carrier:

$$\phi_i \ (F_1t) \ = \ W_N \ ^{I\beta_M(F1t)} \qquad 0 \le i \le I-1$$

     where $\beta_M(n)$ is the remainder of the integer division of n by M and $W_N = \exp^{(j2\pi/N)}$;
     d) a second processor (DFT) which inputs are connected to the outputs of multitone modulators (MTM) of the fourth plurality, and performing the reverse discrete Fourier transform on I channels;
     e) a second rate converter (MLRC), having I inputs and N outputs, where N = M.I, with M and I integer, producing at output N channels ($s_0$, $s_1$, $s_2$, .. $s_{N-1}$) at a rate F lower than $F_1$;
   - demodulation and ordering means (D&O) connected to the outputs of said demultiplexing means (CS);
   - means (DDSK) for re-alignment of data they receive at input the outputs of demodulation and ordering means (D&O) and emitting at output data sequences ($s_0$ - $s_{2N-1}$).

3. Orthogonal frequency division multiplexing method (OFDM) for the transmission of N data ($c_n(t)$) sequences or channels having a predetermined rate F, said method including the following steps:
   a - to submit said sequences ($c_n(t)$) to data staggering (DS)
   b - to pre-modulate and to order (P&O) the sequences so treated ($x_n(t)$);
   c - to multiplex (SC) the pre-modulated and ordered sequences ($s_n(t)$);
   d - to convert said sequences ($s_n(t)$) into the serial form (P/S);
   characterized by the fact to foresee also the following steps:
   b1 - to convert (LMRC) said N pre-modulated and ordered sequences ($s_n(t)$) in I channels ($a_0$, $a_1$, $a_2$, .. $a_{I-1}$) having a rate F1 higher than said set rate F, where N = M.I;
   b2 - to perform the discrete Fourier transform (I-DFT) on I channels ($a_0$, $a_1$, $a_2$, .. $a_{I-1}$) ;
   b3 - to modulate each one of the I channels where the Fourier transform has been made with a carrier:

$$\phi_i\ (F_1 t)\ =\ W_N{}^{I\beta_M(F1t)}\qquad 0 \le i \le I-1$$

where $\beta_M(n)$ is the remainder of the integer division of n by M and $W_N = \exp^{(j2\pi/N)}$;

b4 - to filter $(Q_i(f))$ said modulated I channels;

b5 - to modulate each one of the I filtered channels ($B_0$, $B_1$, $B_2$, .. $B_{I-1}$) with a carrier:

$$\gamma_i(F_1 t)\ =\ W_{2M}{}^{(F1t)2\dagger}.$$

4. Method for orthogonal frequency division demultiplexing method (OFDM) of a multiplexed signal, according to claim 1, characterized by the fact to foresee the following steps:

- to convert (S/P) the serial signal ($v_R(t_0)$) received into I parallel channels, having a transmission rate F1 higher than the said predetermined rate F;

- to demodulate (MTM) each one of the I parallel channels with a carrier:

$$\gamma_i(F_1 t)\ =\ W_{2M}{}^{(F1t)2\dagger}.$$

- to filter $(Q_i(f)_R)$ I channels so demodulated;

- additionally to demodulate (MTM) the I filtered channels with a carrier:

$$\phi_i\ (F_1 t)\ =\ W_N{}^{I\beta_M(F1t)}\qquad 0 \le i \le I-1$$

where $\beta_M(n)$ is the remainder of the integer division of n by M and $W_N = \exp^{(j2\pi/N)}$;

- to make the reverse discrete Fourier transform (I-DFT) on the I demodulated channels;

- to convert (MLRC) the I channels submitted to Fourier transform into N channels ($s_0$, $s_1$, $s_2$, ... $s_{N-1}$) having a rate F lower than the transmission rate F1 and equal to the said predetermined rate, where N = M.I;

- to demodulate and to order (D&O) the N channels at said predetermined rate F and re-align (DDSK) data so ordered to obtain the sequences of data transmitted in origin ($s_0$ - $s_{2n-1}$).

Fig. 1

Fig. 2

Fig. 3

Fig. 4

Fig. 5

$T_0 \longrightarrow$ $\boxed{H_E(f)_R}$ $\xrightarrow{T_0}$ $\boxed{S/P}$ $\xrightarrow{T}$ $\boxed{CS}$ $\xrightarrow{T}$ $\boxed{D\&O}$ $\xrightarrow{T}$ $\boxed{DDSK}$ $\xrightarrow{2T}$

## Fig. 6

$v_R(t_0) \longrightarrow \boxed{H_E(f)_R} \longrightarrow \boxed{S/P}$

MTM1

$\boxed{Q_0(f)_R}$ MTM2

$\gamma(F_1 t)$ $\quad$ $\Phi_0(F_1 t)$

$\boxed{Q_i(f)_R}$

$\gamma(F_1 t)$ $\quad$ $\Phi_i(F_1 t)$

$\boxed{Q_{I-1}(f)_R}$

$\gamma(F_1 t)$ $\quad$ $\Phi_{I-1}(F_1 t)$

$\boxed{DFT}$ $\boxed{MLRC}$

$S_0(t)$

$S_I(t)$

$S_{N-1}(t)$

## Fig. 7

11